# FASCICULE DE BREVET EUROPEEN

(11) **EP 2 078 183 B1**
(45) Date de publication et mention de la délivrance du brevet: **14.08.2013**
(21) Numéro de dépôt: 07821090.3
(22) Date de dépôt: 09.10.2007
(51) Int. Cl.: G01C 23/00, G08G 5/00

(54) **Dispositif optoélectronique d'aide au guidage et au roulage sur piste pour aéronef comportant une symbologie dédiée**
Optische Vorrichtung zur Unterstützung der Führung eines Flugzeuges auf einer Rollbahn mittels zugeordneter Symbole
Optical guiding and taxiing assistance device for an aircraft having a dedicated symbology

(30) Priorité: 10.10.2006 FR 0608869
(43) Date de publication de la demande: 15.07.2009
(73) Titulaire: THALES, 92200 Neuilly sur Seine (FR)
(72) Inventeur: DUBOURG, Bernard, F-33185 Le Haillan (FR); MICHEL, François, F-33160 Saint Medard En Jalles (FR)
(74) Mandataire: Esselin, Sophie
(86) Numéro de dépôt international: PCT/EP2007/060722
(87) Numéro de publication internationale: WO 2008/043763

(56) Documents cités:
- WO-A-97/14114
- WO-A-99/04304
- US-A1- 2004 056 952
- US-A1- 2004 059 497
- US-B1- 6 411 890
- US-B1- 6 571 166

## Description

Le domaine de l'invention est celui des dispositifs optoélectroniques d'aide au guidage et au roulage pour aéronef, comportant un collimateur dit tête haute permettant la présentation d'informations dans le champ visuel du pilote. Elle s'applique notamment aux aéronefs civils de grande taille de type Boeing 747 ou Airbus A380.

Il est important que les phases de roulage au sol des aéronefs dans un aéroport puissent se faire en toute sécurité, quelle que soit la densité du trafic aérien ou les conditions de visibilité. Un train d'atterrissage d'aéronef a souvent un encombrement important et occupe une partie notable de la largeur des voies de circulation. Par exemple, la largeur du train d'atterrissage d'un Airbus A380 dépasse 14 mètres. Un des objectifs majeurs pour assurer la sécurité est que, pendant le roulage, l'ensemble du train d'atterrissage reste parfaitement sur la voie de circulation afin d'éviter que l'aéronef ne se rapproche trop d'obstacles à proximité de la voie de circulation ou que le train d'atterrissage n'aille sortir de la piste.

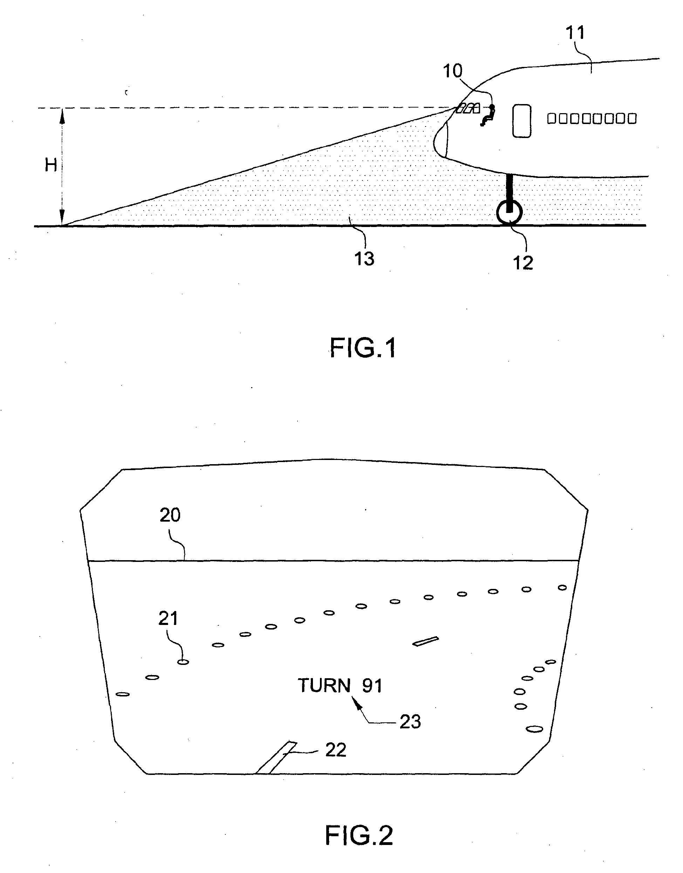

Un des points délicats du roulage est la négociation des virages. En effet, comme illustré en figure 1, dans un avion 11, le pilote 10 se situe à une hauteur H de plusieurs mètres au-dessus du sol. De ce fait, une zone 13 de non-visibilité est importante en dessous de l'appareil. Ainsi, dans un Airbus A380, le pilote est placé à 7 mètres au-dessus du sol et la zone 13 de non visibilité en grisé sur la figure 1 s'étend sur 25 mètres. D'autres part, la grande distance séparant le train principal d'atterrissage et la roulette de nez 12 ne facilite pas la manoeuvre. Dans un Airbus A380, cette dernière distance atteint 30 mètres.

Sur les aéronefs modernes, pour assurer la fonction de navigation aéroportuaire, il existe deux types de systèmes d'aide à la circulation au sol. Ce sont:
- Un système d'aide à la navigation permettant au pilote :
   ○ d'une part, de connaître la position de l'aéronef dans l'aéroport à tout moment ;
   ○ d'autre part, de lui indiquer quel chemin suivre pour se rendre d'un point à un autre sur l'aéroport.

   Généralement les informations utiles sont présentées sur une visualisation de planche de bord dite tête basse. Ces informations comprennent :
   ○ une carte électronique mobile de l'aéroport ;
   ○ la position de l'aéronef sur l'aire de manoeuvre de l'aéroport ;
   ○ la trajectoire à suivre et les points d'arrêts, ces derniers correspondent aux autorisations de roulage fournies par le contrôle au sol.
- Un système d'aide au roulage permettant au pilote de suivre, au plus près, la trajectoire de consigne venant du contrôle.
   Dans ce dernier cas, des informations utiles sont présentées sur un collimateur tête haute encore appelé HUD, acronyme anglo-saxon de Head-Up Display. Un collimateur tête haute comprend classiquement une source d'images générant une symbologie, une optique de collimation et un combineur optique placé dans le champ visuel du pilote. Le collimateur donne ainsi une image virtuelle à l'infini de la symbologie superposée au paysage extérieur.

La symbologie donne des informations sur la trajectoire à suivre et un certain nombre de consignes. Elle est générée par un calculateur dédié au collimateur. Dans le cas du système d'aide au roulage, les informations sont fournies au calculateur du collimateur par :
- Le système principal de navigation, notamment pour les informations de cap, de vitesse au sol et de position ;
- Le calculateur de navigation aéroportuaire, à partir :
   ○ des consignes de circulation fournies par le contrôleur aérien, suite de segments de voies de circulation que doit emprunter l'avion pendant la phase de roulage, et
   ○ Des informations contenues dans une base de données relative à la plate-forme aéroportuaire sur laquelle se trouve l'avion. Il existe trois catégories de base de données donnant la description des aéroports, appelées « Coarse », « Medium et « Fine », définies dans le document RTCA DO272 / EUROCAE ED99, intitulé « Users Requirements for Aerodrome Mapping Information ». Pour ce type d'application, les bases de données utilisées sont de la catégorie « Fine ».

La capacité de surveillance globale de la situation de l'aéronef et la précision des manoeuvres à effectuer manuellement dépendent directement des caractéristiques et de l'ergonomie des symboles présentés au pilote, à travers le HUD.

Classiquement, on sépare les symboles affichés dans un collimateur tête haute en deux grandes catégories :
- les symboles dits conformes ou 3D qui donnent une meilleure perception de l'environnement de l'aéronef. Ces symboles sont particulièrement utiles en cas de visibilité dégradée, par exemple pour la circulation de nuit ou par mauvaises conditions météorologiques. L'image virtuelle fournie par le collimateur se superpose aux éléments extérieurs auxquels ils sont associés, telle que la ligne d'horizon, par exemple. Dans le cas de l'aide au roulage, les symboles présentés au pilote sont essentiellement des symboles associés à la voie de circulation sur laquelle est situé l'aéronef, la ligne de guidage peinte sur la voie de circulation est un exemple.
- les symboles dits non conformes encore appelés 2D qui fournissent au pilote des informations de navigation qui sont, par exemple :
   ○ la destination finale du cheminement ;
   ○ le prochain point d'arrêt appelé en terminologie anglo-saxonne « clairance limite » ;
   ○ le temps estimé ou la distance de l'aéronef jusqu'au point final de cheminement :
   ○ les changements de direction à effectuer ;
   ○ la vitesse sol de l'aéronef ;
   ○ la valeur du cap magnétique ;

La figure 2 représente un exemple de symboles d'aide au roulage, selon l'art antérieur, lorsque l'aéronef aborde un virage. La symbologie a été simplifiée et seuls les éléments nécessaires à l'invention ont été conservés. Le cadre en traits gras de la figure 2 et de la figure 7 représente les limites angulaires du combineur optique. Cette symbologie comprend :
- Une représentation conforme en 3D dans laquelle les symboles présentés se superposent aux éléments extérieurs qu'ils représentent. Ces symboles sont :
   ○ Des marques axiales 22 de voie de circulation de forme rectangulaire. Ces rectangles sont représentés en perspective, leur orientation et leur taille dépendant de leur position par rapport à l'aéronef ;
   ○ Des marques latérales 21 de sécurité, de voie de circulation, de forme circulaire et qui apparaissent sous forme d'ellipses dans la figure 2 ;
   ○ La ligne d'horizon 20 ;
- Une représentation non conforme en 2D. A titre d'exemple, un changement de direction 23 est représenté. Ce changement de direction est symbolisé par le texte « TURN » suivi de l'indication du nombre de mètres à parcourir avant le prochain virage de l'aéronef. Dans l'exemple de la figure 2, la distance restant à parcourir est de 91 mètres.

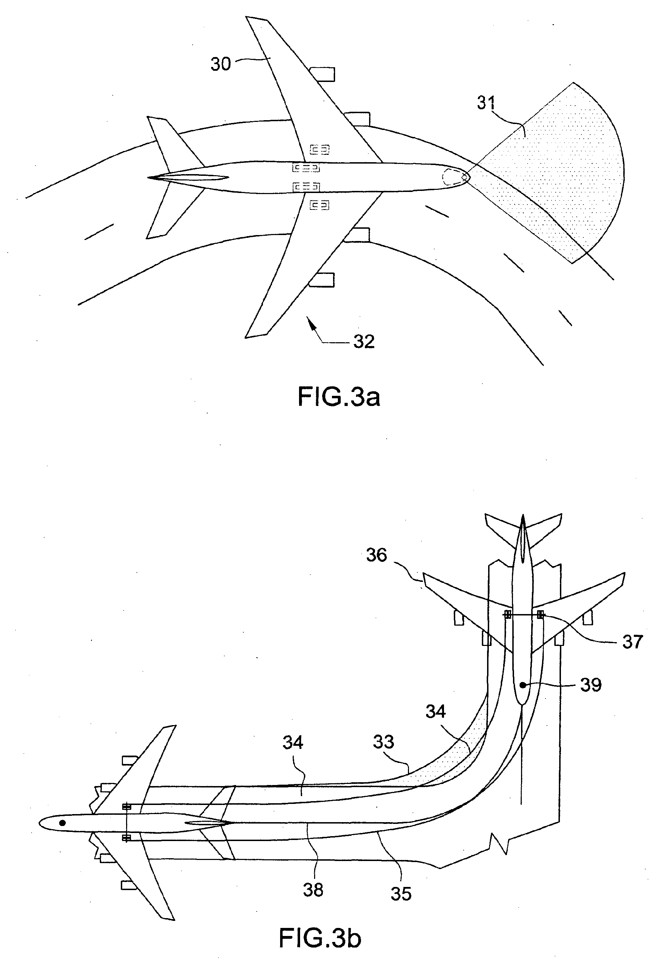

Cette représentation convient tant que l'appareil se trouve à l'entrée du virage ou tant que les conditions de visibilité sont bonnes. Cependant, lorsque l'appareil est au milieu d'un virage, cette représentation devient insuffisante. Comme on le voit sur la figure 3a, il est parfaitement possible qu'au milieu d'un virage 32, compte-tenu de la zone 31 de non-visibilité représentée par la zone grisée et située devant l'appareil 30, la symbologie affichée ne comporte plus aucune marque latérale de sécurité exploitable. Si, d'autre part, la visibilité est réduite, le pilote se trouve alors totalement dénué d'informations et de repères visuels.

Le brevet, dont le numéro de dépôt est 05 07323, propose une amélioration de la symbologie de la figure 2 intégrant notamment des symboles, représentant des plots de forme cylindrique de hauteur variable, situés à l'extérieur des virages. Avantageusement la hauteur des plots donne au pilote une représentation de la situation de l'aéronef dans le virage.

Néanmoins, contenu du champ restreint du pilote dans les aéronefs de type A380, ou de gros porteurs équivalent, et des conditions climatiques sévères qui peuvent nuire à la visibilité, notamment dans les virages, le pilote n'a pas toujours un critère simple relatif à l'écart de sa trajectoire réelle par rapport à la trajectoire théorique qu'il devrait suivre. La symbologie des éléments de la piste devient insuffisante.

Le document US6571166B1 décrit un dispositif pour assister le pilote d'un aéronef au roulage dans lequel les symboles décrivent une vue de dessus représentant la roulette de nez et le train principal sous forme de triangles. Les symboles affichés par le dispositif décrit dans le document WO 99/04304 A facilitent l'anticipation de virages.

L'invention se situe dans le cadre de cette fonction d'aide au roulage et propose un critère simple au pilote, relatif à l'écart de la trajectoire réelle de l'aéronef avec la trajectoire théorique sur une voie de circulation.

Elle s'applique lorsque l'aéronef est en ligne droite sur une voie de circulation aéroportuaire ou lorsqu'il franchit un virage. L'objet du dispositif selon l'invention est de présenter, à l'aide du HUD selon un cas de réalisation, un ensemble de symboles ergonomiques permettant d'informer le pilote de l'écart entre la trajectoire de l'aéronef et la trajectoire qu'il devrait suivre théoriquement. Cette symbologie est complétée par une information d'anticipation de cet écart, permettant au pilote de prévoir un changement de trajectoire imminent.

L'anticipation du changement de trajectoire de l'aéronef permet de maintenir un écart nul ou quasi nul pendant la phase de roulage. De plus, l'anticipation permet de conduire l'aéronef en toute sécurité, y compris par mauvaises conditions météorologiques.

Plus précisément, le dispositif optoélectronique selon l'invention d'aide au guidage pour aéronef s'applique aux aéronefs comportant un train d'atterrissage et une roulette de nez, l'aéronef étant situé sur une voie de circulation d'aéroport.

Avantageusement, le dispositif comprend des moyens de calculs d'un facteur d'écart de la trajectoire réelle dudit aéronef avec une trajectoire théorique sur ladite voie de circulation, des moyens de génération de symboles et au moins un collimateur tête haute comprenant des moyens d'affichage et de superposition desdits symboles sur le paysage extérieur.

Avantageusement, le facteur d'écart est calculé à partir d'un premier angle (*PÂ'G*) déterminé par le sommet d'un triangle défini par un premier point (A'), issu de la projection du point central du train d'atterrissage sur la trajectoire réelle, un second point, appelé point de guidage (G), situé entre la projection du point de la roulette de nez (A) de l'aéronef et la projection du point central du train principal d'atterrissage sur la trajectoire réelle et un troisième point (P), défini par la projection du point de guidage sur la trajectoire théorique.

Avantageusement, les moyens de génération de symboles génèrent un symbole représentant ledit facteur d'écart, de façon à être superposé à ladite voie de circulation.

Le dispositif selon l'invention est rendu actif ou passif par une commande du pilote. Cette commande peut être du type actionneur mécanique ou une commande numérique. Dans un autre mode de réalisation, il peut être déclenché comme actif ou passif automatiquement.

Avantageusement, une information d'anticipation est calculée à partir d'un second angle (*TÂ'T'*) déterminé par le sommet d'un triangle comportant un premier point, appelé point d'anticipation (T), situé entre le point de la roulette de nez (A) et le point de guidage (G) et un second point (T') obtenu par projection du point d'anticipation (T) sur la trajectoire théorique et enfin un troisième point, le sommet (A'), défini par la projection du point central du train principal d'atterrissage sur la trajectoire réelle.

Avantageusement, les moyens de génération de symboles génèrent un signal représentant ladite information d'anticipation, de façon à être superposé à ladite voie de circulation.

Avantageusement, le symbole d'affichage représentant le facteur d'écart est un losange se déplaçant latéralement.

Avantageusement, le symbole d'affichage, représentant le facteur, d'écart est un cercle comprenant trois segments axiaux, ledit cercle se déplaçant latéralement.

Avantageusement, la position centrale sur l'affichage est repérée par un marqueur fixe correspondant à un écart nul entre la trajectoire réelle et la trajectoire théorique.

Avantageusement, le marqueur central correspondant à un écart nul entre la trajectoire réelle et la trajectoire théorique, est un rectangle ou un carré.

Avantageusement, le signal, représentant l'information d'anticipation, est le clignotement d'un symbole, ledit clignotement se déclenchant lorsque le second angle (*TÂ'T'*) dépasse un seuil prédéfini.

Avantageusement, le symbole clignotant est le symbole représentant le facteur d'écart ou le marqueur fixe.

Avantageusement, le point de guidage (G), sur des gros porteurs, de type A380 ou B747, est situé à une distance de la roulette de nez (A) équivalente à un tiers de la distance entre la roulette de nez et le centre du train principal de l'aéronef (A').

Avantageusement, le point de guidage (G), sur des petits porteurs, de type A320, est situé sur roulette de nez (A).

D'autres caractéristiques et avantages de l'invention apparaîtront à l'aide de la description qui suit faîte en regard des figures annexées parmi les quelles:
- la figure 1 représente une vue de l'avant d'un aéronef avec sa zone de non visibilité ;
- la figure 2 représente une symbologie affichée dans un collimateur selon l'art antérieur ;
- La figure 3a représente une vue de dessus de l'aéronef abordant un virage sur une voie de circulation ;
- La figure 3b représente la trajectoire de l'aéronef lorsque la roulette de nez est choisie comme point de guidage ;
- La figure 4 représente l'aéronef simplifié, son cap et la trajectoire théorique, lorsque l'aéronef est sur une ligne droite ;
- La figure 5 représente l'aéronef simplifié, son cap et la trajectoire théorique, lorsque l'aéronef est dans un virage.
- Les figures 6a et 6b représentent deux exemples de symboles du facteur d'écart.

L'objectif du dispositif selon l'invention est de déterminer un critère simple de l'écart entre la trajectoire que suit l'aéronef et la trajectoire théorique. La trajectoire théorique est définie par la courbe centrée sur la piste.

La définition d'un point de référence, appelé point de guidage par la suite, situé sur l'axe principal de l'aéronef est nécessaire au pilote pour que celui-ci roule constamment sur la piste. Par exemple, pour des aéronefs de taille moyenne, type A320, le point de guidage peut être la roulette de nez, celle-ci étant la roulette la plus avancée de l'aéronef. Dans ce cas, Le pilote guide l'aéronef sur les voies de circulation aéroportuaire, de manière à ce que la roulette de nez reste constamment au dessus du milieu de la piste.

Le dispositif selon l'invention consiste à fournir, au pilote, une symbologie représentant, dans cet exemple, l'écart entre la roulette de nez et le centre de la piste.

Compte tenu des recommandations de l'annexe 14 de l'Organisation de l'Aviation Civil Internationale, appelé OACI, la définition des largeurs de pistes aéroportuaires permet de choisir la roulette de nez, pour les aéronefs de taille petites et/ou moyenne, comme référence de guidage si celle-ci est positionnée constamment pendant la manoeuvre au dessus des marques centrales des pistes.

En revanche, le cas des aéronefs de type gros porteur, tel que l'A380 ou le B747, ne permet pas de choisir le point de la roulette de nez comme point de guidage. L'envergure du train d'atterrissage, très large risque de sortir de la piste lors du franchissement d'un virage.

La figure 3b représente la trajectoire d'un aéronef 36, de type A380. Ledit aéronef est représenté dans un virage, d'une voie de circulation aéroportuaire. Au sol, la trajectoire 38, de la roulette de nez 39, ainsi que deux trajectoires 34, 35, respectivement des roues, situées aux extrémités du train d'atterrissage 37, sont représentées. La figure 3b représente un cas où le point de la roulette de nez est choisi comme référence pour guider l'aéronef. Dans ce cas, la trajectoire 38, représente la projection de la roulette de nez 39 sur la piste lorsque l'avion suit la trajectoire théorique. On note, par ailleurs, que l'une des deux trajectoires, parallèles et formées par les roues aux extrémités du train principal 37, sort de la piste dans la zone 33. La trajectoire de l'aéronef ne peut pas être calculée à partir de la roulette de nez au risque que le train principal quitte la piste.

Un certain nombre de points, situés à l'arrière de la roulette de nez peuvent constituer une référence de guidage. Ces points sont choisis de manière à ce que le train principal d'atterrissage ne sorte pas de la piste durant toute la manoeuvre.

Ces points, situés sur l'axe principal de l'aéronef, sont compris entre la roulette de nez et le train principal de l'aéronef. Le train principal est le train de l'aéronef ayant la plus grande envergure.

La trace d'un de ces points est alors comparée à la courbe centrée sur la piste, appelée trajectoire théorique.

Le dispositif selon l'invention introduit un point de l'aéronef, appelé point de guidage, noté G, permettant de fournir un critère simple de l'écart entre les deux trajectoires, appelé facteur d'écart.

Ce point est choisi comme référence de guidage, de manière à ce que la trajectoire de l'aéronef sur la piste ne permette pas au train principal d'atterrissage de sortir de la piste.

Le calcul du facteur d'écart est calculé à partir de la position du point G sur la piste, par rapport à la courbe centrée sur la piste. Ce facteur d'écart permet de fournir au pilote une commande de guidage. Cette commande est calculée à partir des moyens de calculs du dispositif.

Une représentation, sous forme d'une symbologie particulière, permet alors au pilote d'observer cet écart à l'aide du collimateur tête haute. En particulier, cette symbologie dédiée permet au pilote, au besoin, d'actionner une commande pour corriger la trajectoire de l'aéronef sur la piste.

Le pilote peut corriger le cap de l'aéronef simplement par une action de guidage à l'aide du symbole représentant ce facteur d'écart.

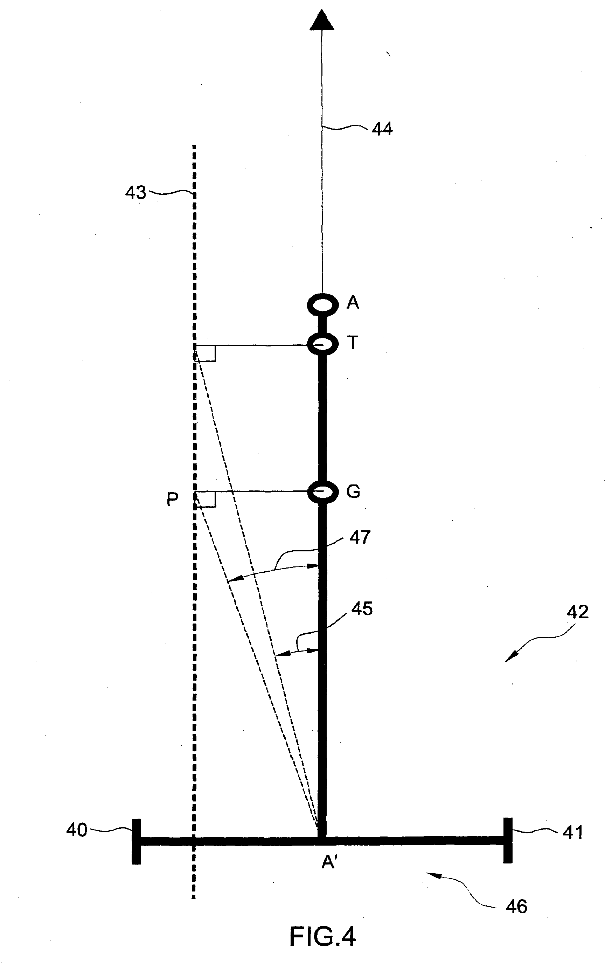

En ce qui concerne le calcul du facteur d'écart, la figure 4 représente un dessin de l'aéronef simplifié dont les principales caractéristiques sont projetées à plat sur le plan du sol. La représentation réduite de l'aéronef comprend le train principal d'atterrissage 46, le train principal de l'aéronef étant le train ayant la plus grande envergure. Le point A représente la roulette de nez de l'aéronef ou encore le barycentre des roulettes avant de l'aéronef dans le cas où il y en a plusieurs. Le train d'atterrissage 46 comprend deux trains de roues 40, 41 placées aux extrémités du train principal. Les roues 40 et 41 sont les roues les plus éloignées de l'axe principal de l'aéronef. Le centre du train A' est situé à l'intersection du train principal d'atterrissage et de l'axe principal de l'aéronef, il est plus précisément situé au milieu du train principal d'atterrissage. La distance AA' représente, alors, la distance entre le centre du train d'atterrissage et la roulette de nez. L'aéronef suit un cap 44. Il est décalé de la trajectoire théorique 43 qui est parallèle à sa propre trajectoire.

Le point G est fixe pour un type d'aéronef donné et est toujours situé sur l'axe AA'. De manière générale, Il est préférable de choisir un point G suffisamment proche de la roulette de nez pour ne pas trop s'écarter de la trajectoire théorique dans les virages. La roulette de nez est désignée sur la figure 4 par point A. Préférentiellement, pour des aéronefs de type gros porteurs, le point G se situe dans la première moitié du segment AA', c'est à dire dans la partie la plus proche du point A. Plus précisément, il est préférable de choisir le point G dans le premier tiers du segment AA'. Ce choix permet un meilleur confort de pilotage et une anticipation accrue des décisions de guidage.

Le point de guidage G étant, une fois pour toutes, déterminé pour une catégorie d'aéronefs, le calculateur connaît, à tout moment, les coordonnées, dans le repère de l'aéroport, du point de guidage. La connaissance des coordonnées du point G, dans le repère de l'aéroport, se fait à partir des informations de positionnement et de cap fournies par le système de navigation de l'aéronef.

On note P, le point issu de la projection de G sur la trajectoire théorique, cette trajectoire étant parallèle à la trajectoire de l'aéronef, dans l'exemple de la figure 4. La trajectoire théorique est connue par le calculateur, car elle peut être prédéfinie en fonction des caractéristiques de l'aéroport. L'angle 45 *PÂ'G* représente le changement de cap nécessaire à réaliser par l'aéronef pour rejoindre la trajectoire théorique. Le dispositif selon l'invention consiste à restituer au pilote une représentation, par le biais d'un symbole, noté facteur d'écart, représentatif d'une représentation de l'écart angulaire.

Le déplacement du facteur d'écart, affiché par le HUD, n'est pas nécessairement conforme à l'écart angulaire réel entre la trajectoire de l'aéronef et la trajectoire théorique. Le facteur d'écart est, généralement, filtré et lissé pour le confort du pilote. Le filtrage et le lissage du déplacement du symbole représentant le facteur d'écart sur l'écran de visualisation sont, préférentiellement, choisis de façon à pallier aux vitesses de déplacements de l'aéronef et aux variations de trajectoire dues à la manoeuvre de la roulette de nez.

Le calcul du facteur d'écart, dans le cas où l'aéronef rentre dans un virage, est semblable au cas d'une trajectoire rectiligne. C'est un cas plus critique étant donné que l'action en temps réel du pilote est indispensable pour guider l'avion dans la courbe.

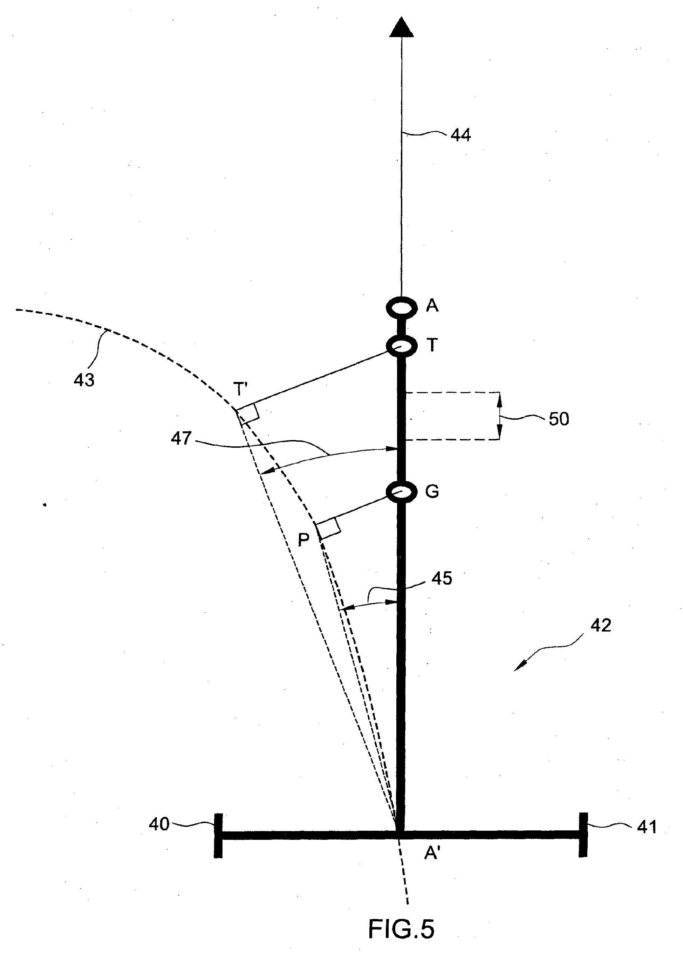

La figure 5 représente une telle trajectoire 43 courbée représentant la courbure d'un virage d'une voie de circulation aéroportuaire. La projection P, du point G, sur la trajectoire théorique 43, forme un angle *PÂ'G* 45. De la même manière que dans une ligne droite, on déduit, de l'écart angulaire entre la trajectoire de l'aéronef et la trajectoire théorique, un facteur d'écart. Ce facteur d'écart est représenté par un symbole permettant au pilote de connaître la commande de guidage à effectuer.

En ce qui concerne l'affichage de l'écart, il est intéressant de représenter dans le viseur tête haute une symbologie ergonomique. Cette symbologie représente, au lissage et au filtrage près, l'écart angulaire entre la trajectoire réelle et la trajectoire théorique.

Pour le confort du pilote, un filtrage et un lissage du déplacement du symbole sont appliqués. Par exemple un écart de 1° entre la trajectoire réelle et la trajectoire théorique peut être représenté par une échelle latérale dilatée. Ainsi que la vitesse de déplacement du symbole n'est pas nécessairement linéaire relativement à la vitesse de déplacement de l'aéronef.

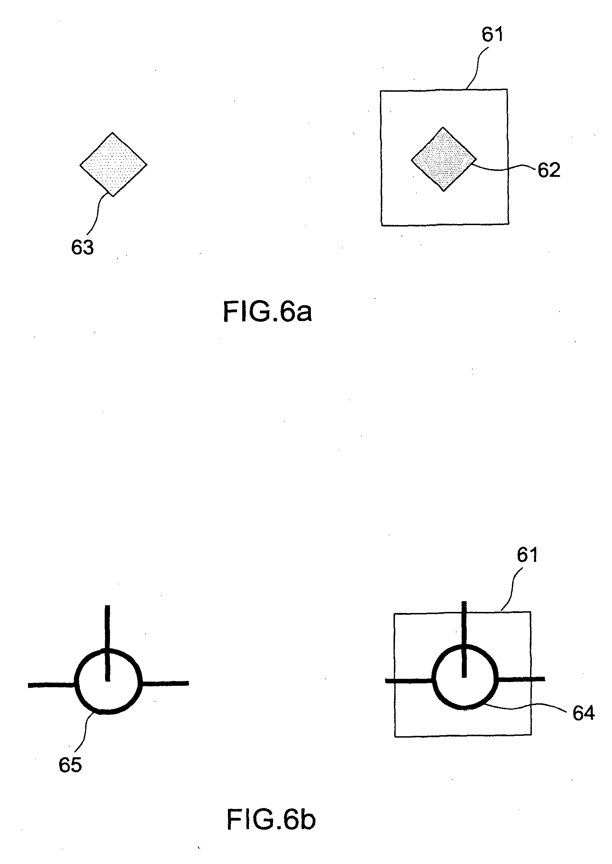

La figure 6a représente un exemple de symbole du facteur d'écart représentant un écart de cap de l'aéronef avec la trajectoire théorique. Le symbole est un diamant, dont la forme est un losange. Sa position nominale est obtenue pour une position du diamant 62 centrée dans un carré 61 fixe sur l'écran de visualisation. Dans un autre cas de réalisation le carré peut être un rectangle. Cette position correspond au cas où aucun écart n'est relevé entre la trajectoire réelle et la trajectoire théorique. Quand il existe un écart entre la trajectoire réelle et la trajectoire théorique, comme illustré sur les figures 4 et 5, la position du diamant 63 glisse latéralement vers le coté où l'aéronef dérive de la trajectoire théorique. Dans ce cas, l'aéronef est symbolisé par le carré, et le centre de la piste par le diamant. Un autre cas de réalisation est d'inverser le sens de déplacement du diamant par rapport au sens de dérive de l'avion. Dans ce dernier cas, l'aéronef est symbolisé par le diamant et le centre de la piste est symbolisé par le carré.

Lorsque la dérive de l'aéronef s'effectue par rapport à la trajectoire théorique, le diamant sort de sa position initiale, c'est à dire du carré de référence. Cette indication permet au pilote d'agir en conséquence et de rétablir le cap de l'aéronef vers le cap théorique à l'aide d'un actionneur mécanique du type manette avec reprise d'efforts. Le pilote ayant modifié sa trajectoire, le calcul de l'angle 45 se fait en temps réel par le calculateur et d'une manière répétitive asservie par les actions du pilote.

La figure 6b représente un exemple d'un second symbole 64 du facteur d'écart. Celui-ci est un cercle et trois segments de droites partant du centre du cercle. Ce symbole représente un dessin de l'aéronef vue de face. Le mécanisme de déplacement de ce symbole est identique à celui, décrit ci-dessus, correspondant au diamant. Sa position 65 représente de la même manière que précédemment un écart entre la trajectoire réelle de l'aéronef et la trajectoire théorique.

Ainsi, après un rétablissement de l'aéronef, par action du pilote, vers le cap idéal, le diamant 63 ou le symbole 64 glissera vers sa position d'origine 62.

Selon les conditions climatiques et de circulations, le dispositif selon l'invention introduit un signal de visualisation au pilote lui permettant d'anticiper les décisions.

La figure 5 représente, sur l'axe principal de l'aéronef, un point T, appelé point d'anticipation, situé entre les points A et G. La position de ce point est préférentiellement choisi proche du point A. On considère T' le point issu de la projection de T sur la trajectoire théorique. L'angle 47 formé par *TÂ'T'* représente l'information d'anticipation.

Dans un autre cas de réalisation, le point d'anticipation peut être situé à l'avant de la roulette de nez, même hors de l'aéronef. Le calcul de l'angle *TÂ'T'* étant indépendant de l'appartenance du point T à l'aéronef, étant donné qu'il s'agit d'un point référence.

Si la trajectoire réelle de l'aéronef ne s'écarte pas ou peu de la trajectoire théorique, l'angle 47 ne dépasse pas une valeur maximum en dessous de laquelle aucun signal visuel n'est affiché sur l'écran de visualisation du pilote. Si la trajectoire réelle de l'aéronef s'écarte au delà d'une valeur référence de l'angle 47, alors un signal visuel est affiché et informe le pilote sur l'écran de visualisation que l'aéronef va bientôt s'écarter de la trajectoire théorique. Le pilote a la possibilité d'anticiper les actions à mener pour corriger la trajectoire de l'aéronef.

Dans un premier cas de réalisation, le signal correspondant à l'information d'anticipation, présenté sous forme visuel au pilote, peut être le clignotement du carré comprenant le symbole du facteur d'écart dans sa position initiale.

Dans un second cas de réalisation, le signal, présenté sous forme visuel au pilote, peut être le clignotement du symbole du facteur d'écart quelque soit sa position latérale.

Dans un troisième cas de réalisation, le signal, présenté sous forme sonore au pilote, peut être une alarme sonore.

## Revendications

1. Dispositif optoélectronique d'aide au guidage pour aéronef, ledit aéronef comportant un train d'atterrissage et une roulette de nez, ledit dispositif comprenant des moyens de calculs d'un facteur d'écart de la trajectoire réelle dudit aéronef sur une voie de circulation d'aéroport avec une trajectoire théorique sur ladite voie de circulation, des moyens de génération de symboles et au moins un collimateur tête haute comprenant des moyens d'affichage et de superposition desdits symboles sur le paysage extérieur, **caractérisé en ce que** le facteur d'écart est calculé à partir d'un premier angle (*PÂ'G*) déterminé par le sommet d'un triangle défini par un premier point (A') issu de la projection du point central du train d'atterrissage sur la trajectoire réelle, un second point, appelé point de guidage (G), situé entre la projection du point de la roulette de nez (A) de l'aéronef et la projection du point central du train principal d'atterrissage sur la trajectoire réelle et un troisième point (P), défini par la projection du point de guidage sur la trajectoire théorique et que les moyens de génération de symboles génèrent un symbole représentant ledit facteur d'écart, de façon à être superposé à ladite voie de circulation.

2. Dispositif optoélectronique selon la revendication 1, **caractérisé en ce qu'**une information d'anticipation est calculée à partir d'un second angle (*TÂ'T'*) déterminé par le sommet d'un triangle comportant un premier point, appelé point d'anticipation (T), situé entre le point de la roulette de nez (A) et le point de guidage (G) et un second point (T') obtenu par projection du point d'anticipation (T) sur la trajectoire théorique et enfin un troisième point, le sommet (A'), défini par la projection du point central du train principal d'atterrissage sur la trajectoire réelle et que les moyens de génération de symboles génèrent un signal représentant ladite information d'anticipation, de façon à être superposé à ladite voie de circulation.

3. Dispositif d'affichage selon la revendication 1, **caractérisé en ce que** le symbole affiché, représentant le facteur d'écart, se déplace latéralement en fonction de la valeur du premier angle (*PÂ'G*), la position du symbole correspondant à un écart nul entre la trajectoire réelle et la trajectoire théorique étant repérée par un marqueur fixe.

4. Dispositif d'affichage selon la revendication 3, **caractérisé en ce que** le symbole d'affichage représentant le facteur d'écart est un losange.

5. Dispositif d'affichage selon la revendication 3, **caractérisé en ce que** le symbole d'affichage, représentant le facteur, d'écart est un cercle comprenant trois segments axiaux.

6. Dispositif d'affichage selon la revendication 3, **caractérisé en ce que** le marqueur correspondant à un écart nul entre la trajectoire réelle et la trajectoire théorique, est un rectangle.

7. Dispositif d'affichage selon la revendication 2, **caractérisé en ce que** le signal, représentant l'information d'anticipation, est le clignotement d'un symbole, ledit clignotement se déclenchant lorsque le second angle (*TÂ'T'*) dépasse un seuil prédéfini.

8. Dispositif d'affichage selon la revendication 7, **caractérisé en ce que** le symbole clignotant est le symbole représentant le facteur d'écart.

9. Dispositif d'affichage selon la revendication 7, **caractérisé en ce que** le symbole clignotant est le rectangle fixe sur l'écran, ce symbole étant associé au symbole du facteur d'écart.

10. Dispositif selon l'une quelconque des revendications 1 à 9, **caractérisé en ce que** le point de guidage (G), sur des gros porteurs, de type A380 ou B747, est situé à une distance de la roulette de nez (A) équivalente à un tiers de la distance entre la roulette de nez et le centre du train principal de l'aéronef (A').

11. Dispositif selon l'une quelconque des revendications 1 à 9, **caractérisé en ce que** le point d'anticipation (T), sur des gros porteurs, de type A380 ou B747, est situé au niveau de la roulette de nez (A).

12. Dispositif selon l'une quelconque des revendications 1 à 9, **caractérisé en ce que** le point de guidage (G), sur des petits porteurs, de type A320, est situé au niveau de la roulette de nez (A).

## Patentansprüche

1. Optoelektronische Vorrichtung zum Assistieren beim Leiten eines Flugzeugs, wobei das Flugzeug ein Fahrwerk und ein Bugfahrwerk aufweist, wobei die Vorrichtung Mittel zum Berechnen eines Abweichungsfaktors der tatsächlichen Flugbahn des Flugzeugs auf einer Flughafenrollbahn mit einer theoretischen Flugbahn auf der Rollbahn, Mittel zum Erzeugen von Symbolen und wenigstens ein Head-Up-Sichtgerät mit Mitteln zum Anzeigen und zum Überlagern der Symbole über die äußere Landschaft umfasst, **dadurch gekennzeichnet, dass** der Abweichungsfaktor von einem ersten Winkel (*PÂ'G*) berechnet wird, der durch die Spitze eines Dreiecks ermittelt wird, das durch einen ersten Punkt (A') von der Projektion des Mittelpunkts des Fahrwerks auf der tatsächlichen Flugbahn, einen zweiten Punkt, Führungspunkt (G) genannt, der sich zwischen der Projektion des Punkts des Bugfahrwerks (A) des Flugzeugs und der Projektion des Mittelpunkts des Hauptfahrwerks auf der tatsächlichen Flugbahn befindet, und einen dritten Punkt (P) definiert wird, der durch die Projektion des Führungspunkts auf der theoretischen Flugbahn definiert wird, und dadurch, dass die Mittel zum Erzeugen von Symbolen ein den Abweichungsfaktor repräsentierendes Symbol zum Überlagern auf die Rollbahn erzeugen.

2. Optoelektronische Vorrichtung nach Anspruch 1, **dadurch gekennzeichnet, dass** eine Erwartungsinformation anhand eines zweiten Winkels (*TÂ'T'*) berechnet wird, der durch die Spitze eines Dreiecks bestimmt wird, das einen ersten Punkt, Erwartungspunkt (T) genannt, der sich zwischen dem Punkt des Bugfahrwerks (A) und dem Führungspunkt (G) befindet, und einen zweiten Punkt (T') beinhaltet, der durch die Projektion des Erwartungspunktes (T) auf der theoretischen Flugbahn erhalten wird, und schließlich einen dritten Punkt, den Scheitelpunkt (A'), umfasst, der durch die Projektion des Mittelpunkts des Hauptfahrwerks auf der tatsächlichen Flugbahn definiert wird, und dadurch, dass die Mittel zum Erzeugen von Symbolen ein die Erwartungsinformation repräsentierendes Signal zum Überlagern auf der Rollbahn erzeugen.

3. Anzeigevorrichtung nach Anspruch 1, **dadurch gekennzeichnet, dass** sich das den Abweichungsfaktor repräsentierende angezeigte Symbol seitlich in Abhängigkeit vom Wert des ersten Winkels (*PÂ'G*) bewegt, wobei die einer Abweichung von null zwischen der tatsächlichen Flugbahn und der theoretischen Flugbahn entsprechende Position des Symbols von einem festen Marker markiert wird.

4. Anzeigevorrichtung nach Anspruch 3, **dadurch gekennzeichnet, dass** das den Abweichungsfaktor repräsentierende Anzeigesymbol eine Raute ist.

5. Anzeigevorrichtung nach Anspruch 3, **dadurch gekennzeichnet, dass** das den Abweichungsfaktor repräsentierende Anzeigesymbol ein Kreis mit drei axialen Segmenten ist.

6. Anzeigevorrichtung nach Anspruch 3, **dadurch gekennzeichnet, dass** der eine Abweichung von null zwischen der tatsächlichen Flugbahn und der theoretischen Flugbahn entsprechende Marker ein Rechteck ist.

7. Anzeigevorrichtung nach Anspruch 2, **dadurch gekennzeichnet, dass** das die Erwartungsinformation repräsentierende Signal das Blinken eines Symbols ist, wobei das Blinken ausgelöst wird, wenn der zweite Winkel (*TÂ'T'*) eine vordefinierte Schwelle übersteigt.

8. Anzeigevorrichtung nach Anspruch 7, **dadurch gekennzeichnet, dass** das blinkende Symbol das den Abweichungsfaktor repräsentierende Symbol ist.

9. Anzeigevorrichtung nach Anspruch 7, **dadurch gekennzeichnet, dass** das blinkende Symbol das feste Rechteck auf dem Bildschirm ist, wobei dieses Symbol mit dem Symbol des Abweichungsfaktors assoziiert ist.

10. Vorrichtung nach einem der Ansprüche 1 bis 9, **dadurch gekennzeichnet, dass** der Führungspunkt (G) auf Großraumflugzeugen des Typs A380 oder B747 sich in einem Abstand von dem Bugfahrwerk (A) befindet, der mit einem Drittel des Abstands zwischen dem Bugfahrwerk und dem Mittelpunkt des Hauptfahrwerks des Flugzeugs (A') äquivalent ist.

11. Vorrichtung nach einem der Ansprüche 1 bis 9, **dadurch gekennzeichnet, dass** sich der Erwartungspunkt (T) auf Großraumflugzeugen des Typs A380 oder B747 am Bugfahrwerk (A) befindet.

12. Vorrichtung nach einem der Ansprüche 1 bis 9, **dadurch gekennzeichnet, dass** der Führungspunkt (G) bei Kleinraumflugzeugen des Typs A320 sich am Bugfahrwerk (A) befindet.

## Claims

1. An optoelectronic guiding assistance device for aircraft, said aircraft comprising landing gear and nose gear, said device comprising means for calculating a deviation factor of the actual trajectory of said aircraft on an airport taxiway with a theoretical trajectory on said taxiway, means for generating symbols and at least one head-up display comprising means for displaying and superposing said symbols on the external landscape, **characterised in that** said deviation factor is calculated on the basis of a first angle (*PÂ'G*) determined by the vertex of a triangle defined by a first point (A') coming from the projection of the central point of the landing gear on the actual trajectory, a second point, designated guiding point (G), located between the projection of the point of the nose gear (A) of the aircraft and the projection of the central point of the main landing gear on the actual trajectory, and a third point (P) defined by the projection of the guiding point on the theoretical trajectory, and **in that** said means for generating symbols generate a symbol representing said deviation factor so as to be superposed on said taxiway.

2. The optoelectronic device according to claim 1, **characterised in that** anticipation information is calculated on the basis of a second angle (*TÂ'T'*) determined by the vertex of a triangle comprising a first point, designated anticipation point (T), located between the point of the nose gear (A) and the guiding point (G), and a second point (T') obtained by the projection of said anticipation point (T) on the theoretical trajectory, and finally a third point, the vertex (A'), defined by the projection of the central point of the main landing gear on the actual trajectory, and **in that** said means for generating symbols generate a signal representing said anticipation information so as to be superposed on said taxiway.

3. The display device according to claim 1, **characterised in that** the displayed symbol, which represents the deviation factor, moves laterally as a function of the value of the first angle (*PÂ'G*), the position of the symbol corresponding to zero deviation between the actual trajectory and the theoretical trajectory being referenced by a fixed marker.

4. The display device according to claim 3, **characterised in that** the display symbol representing the deviation factor is a diamond.

5. The display device according to claim 3, **characterised in that** the display symbol representing the deviation factor is a circle comprising three axial segments.

6. The display device according to claim 3, **characterised in that** the marker corresponding to a zero deviation between the actual trajectory and the theoretical trajectory is a rectangle.

7. The display device according to claim 2, **characterised in that** the signal, which represents the anticipation information, is the blinking of a symbol, said blinking being triggered when the second angle (*TÂ'T'*) exceeds a predefined threshold.

8. The display device according to claim 7, **characterised in that** said blinking symbol is the symbol representing the deviation factor.

9. The display device according to claim 7, **characterised in that** said blinking symbol is the fixed rectangle on the screen, said symbol being associated with the symbol of the deviation factor.

10. The device according to any one of claims 1 to 9, **characterised in that** the location of the guiding point (G) on wide-bodied aircraft of the A380 or B747 type is separated from the nose gear (A) by a distance that is equivalent to a third of the distance between the nose gear and the centre of the main landing gear of the aircraft (A').

11. The device according to any one of claims 1 to 9, **characterised in that** the anticipation point (T) on wide-bodied aircraft of the A380 or B747 type is located on the nose gear (A).

12. The device according to any one of claims 1 to 9, **characterised in that** the guiding point (G) on narrow-bodied aircraft of the A320 type is located on the nose wheel (A).
